# FASCICULE DE BREVET EUROPEEN

(11) **EP 0 747 257 B1**
(45) Date de publication et mention de la délivrance du brevet: **25.07.2001**
(21) Numéro de dépôt: 96401182.9
(22) Date de dépôt: 04.06.1996
(51) Int. Cl.: B60N 2/28

(54) **Siège pour enfant**
Kindersitz
Child seat

(30) Priorité: 07.06.1995 FR 9506705; 20.11.1995 FR 9513732
(43) Date de publication de la demande: 11.12.1996
(73) Titulaire: AMPAFRANCE S.A., 49309 Cholet (FR)
(72) Inventeur: Lefranc, Louis, 44000 Nantes (FR)
(74) Mandataire: Casalonga, Axel

(56) Documents cités:
- EP-A- 0 328 311
- EP-A- 0 353 377
- EP-A- 0 447 097
- WO-A-90/02666
- DE-A- 3 505 009
- DE-A- 4 121 795
- DE-C- 4 108 660
- FR-A- 2 602 409

## Description

La présente invention a pour objet un siège pour enfant comportant une partie d'assise et une partie de dossier, destiné à être posé et fixé sur un siège de véhicule automobile lui-même équipé d'une ceinture de sécurité à trois points.

Les sièges pour enfant de ce type comme decrit par exemple dans le document DE-A-4 121 795, peuvent etre fixés de différentes manières au siège du véhicule automobile. Dans certains cas, la fixation se fait par une sangle spécifique qui vient s'accrocher sur les points d'ancrage des ceintures de sécurité du véhicule automobile. Une telle réalisation présente l'inconvénient d'obliger à prévoir des moyens spécifiques de fixation pour le siège d'enfant.

On connaît également des sièges pour enfant destinés à être utilisés dans un véhicule automobile qui sont fixés au siège du véhicule automobile au moyen de la ceinture de sécurité généralement à trois points, c'est-à-dire comportant une portion ventrale et une portion pectorale, dont le siège du véhicule est équipé d'origine. Le maintien en position du siège pour enfant se fait généralement en faisant passer la portion ventrale de la ceinture de sécurité du véhicule à travers des orifices pratiqués dans un support qui est posé sur le siège du véhicule et sur lequel est fixée, éventuellement avec des possibilités de réglage. la partie d'assise du siège pour enfant. La portion pectorale de la ceinture de sécurité du siège du véhicule peut passer au même endroit que la portion ventrale comme décrit par exemple dans la demande de brevet européen 447 097 (Britax). Dans d'autres réalisations, comme décrit par exemple dans la demande de brevet européen 353 377 (Concord), la portion pectorale de la ceinture de sécurité du véhicule passe derrière la partie de dossier du siège pour enfant dans un moyen de guidage dont ladite partie de dossier est munie. Le moyen de guidage peut également autoriser un blocage en position de la portion pectorale de la ceinture de sécurité comme décrit dans la demande de brevet allemand publiée sous le n° 41 08 660.

La demande de brevet allemand publiée n° 41 21 795 (Würstl), déjà mentionnée auparavant, décrit un siège pour enfant comportant une base support maintenue sur le siège du véhicule par le passage de la portion ventrale de la ceinture de sécurité du véhicule. Ce siège, fixé sur la base support, comporte un harnais de sécurité dont les extrémités peuvent être fixées sur une pièce fixée à demeure sur la paroi arrière du dossier du siège et qui assure en outre un guidage libre de la portion pectorale de la ceinture de sécurité du véhicule. Une telle réalisation présente une certaine complexité du fait de la présence de la base support. De plus, le siège ne peut pas être adapté en fonction de la taille de l'enfant et l'absence de blocage de la portion pectorale de la ceinture ne permet pas une stabilisation convenable du maintien du siège de l'enfant sur le siège du véhicule.

La structure générale de tous ces sièges pour enfant de type connu est donc généralement assez complexe en raison de l'existence d'un support destiné à être posé sur le siège du véhicule automobile et recevant la partie d'assise du siège pour enfant et le maintien du siège et de l'enfant quelle que soit sa taille, ne donnent pas entière satisfaction.

On connaît également des sièges pour enfants qui sont directement posés sur le siège du véhicule automobile et dans lesquels l'enfant, déjà de taille suffisante, est maintenu par la ceinture de sécurité du véhicule, laquelle sert alors en même temps d'organe de retenue pour le siège d'enfant. Ce type de réalisation est cependant mal adapté aux enfants plus jeunes âgés de 1 à 2 ans et d'un poids généralement compris entre 9 et 18 kg. En effet, il est préférable de retenir ces enfants par un harnais spécifique. Dans ce cas, d'autres moyens doivent être prévus pour fixer le siège d'enfant sur le siège du véhicule.

La présente invention a pour objet un siège pour enfant destiné à être monté sur un siège de véhicule automobile dont la structure soit nettement plus simple à fabriquer que celle des sièges de type connu, qui soit facile à poser sur le siège du véhicule automobile, et qui soit efficacement maintenu au moyen de la ceinture de sécurité dont celui-ci est équipé.

L'invention a également pour objet un siège de ce type dans lequel les efforts, en cas d'accident, soient intégralement repris directement par la ceinture de sécurité du véhicule, l'enfant étant maintenu sur son siège par des moyens adaptés à sa taille.

L'invention a également pour objet un tel siège pour enfant qui puisse être aisément adapté à la taille de l'enfant.

Le siège pour enfant, tel qu'il est revendiqué, comporte une partie d'assise délimitée par des surfaces latérales définissant des rebords et une partie de dossier et est destiné à être posé et fixé sur un siège de véhicule automobile équipé d'une ceinture de sécurité à trois points comportant une portion ventrale et une portion pectorale, le siège comportant des moyens de guidage de la portion ventrale de la ceinture de sécurité du véhicule, la partie de dossier comportant, sur sa face arrière, un moyen de guidage de la portion pectorale de la ceinture de sécurité, ledit moyen de guidage étant réglable en hauteur et comportant en outre des moyens pour fixer les extrémités d'une sangle de bretelles d'un harnais de sécurité traversant la partie de dossier du siège pour enfant. Selon l'invention, la partie d'assise est adaptée pour être posée directement sur le siège du véhicule automobile et présente lesdits moyens de guidage de la portion ventrale de la ceinture de sécurité, par exemple un passage inférieur, ledits moyens de guidage comprenant des fentes ouvertes pratiquées dans les surfaces latérales de la partie d'assise et partiellement délimitées par des portions en forme de crochet avec un rebord d'appui sur lequel peut venir passer et s'appuyer la portion ventrale de la ceinture de sécurité du véhicule.

De cette manière, le siège peut être utilisé pour des enfants de taille plus importante, après démontage du harnais de sécurité, l'enfant étant maintenu sur son siège au moyen de la portion pectorale de la ceinture de sécurité, qui passe alors devant l'enfant. La portion ventrale de la ceinture passe au-dessus des cuisses de l'enfant en étant maintenue par les crochets précités.

A cet effet, les moyens de fixation et d'ancrage du harnais de sécurité sont tels que le harnais de sécurité puisse être détaché du siège pour enfant.

Le moyen de guidage de la portion pectorale de la ceinture de sécurité peut comporter des moyens de blocage en position de la portion pectorale. Ces moyens peuvent avantageusement être prévus pour permettre son réglage en hauteur sur la partie de dossier, par exemple au moyen d'une plaque de montage capable de coopérer avec des moyens de fixation prévus à diverses hauteurs dans la partie de dossier du siège.

Dans un mode de réalisation préféré, la plaque de montage est munie de pièces de retenue pour un organe de blocage mobile entre une première position permettant l'introduction de la portion pectorale de la ceinture, une deuxième position permettant le guidage de ladite portion pectorale et une troisième position assurant le blocage en position de ladite portion pectorale de la ceinture.

Les pièces de retenue peuvent avantageusement être réalisées sous la forme de deux pontets coopérant avec une tige coulissante munie d'une zone courbe, jouant le rôle d'organe de blocage.

La plaque de montage présente de préférence, de part et d'autre des pièces de retenue, des fentes ouvertes permettant le passage des extrémités de la sangle de bretelles du harnais de sécurité et la fixation de ces extrémités sur les pièces de retenue.

Les extrémités de la sangle de bretelles, conformées en boucle, peuvent alors venir entourer les pontets, ce qui assure la reprise des efforts en cas d'accident, directement par la portion pectorale de la ceinture de sécurité du véhicule.

Dans un mode de réalisation préféré, la plaque de montage comprend des moyens d'encliquetage capables de coopérer avec les bords d'ouvertures pratiquées à diverses hauteurs dans la partie de dossier du siège.

La partie de dossier peut être articulée sur la partie d'assise pour permettre de placer la partie de dossier dans différentes inclinaisons tout en autorisant la séparation de la partie de dossier et de la partie d'assise afin de diminuer l'encombrement du siège lorsqu'il n'est pas utilisé.

La partie d'assise comprend de préférence un moyen d'ancrage pour une sangle d'entre-jambes du harnais de sécurité.

L'invention sera mieux comprise à l'étude d'un mode de réalisation détaillé à titre d'exemple nullement limitatif et illustré par les figures annexées sur lesquelles :
la figure 1 est une vue en perspective montrant un siège pour enfant selon l'invention installé sur un siège de véhicule automobile, le rembourrage du siège pour enfant n'ayant pas été représenté pour simplifier la figure;
la figure 2 est une vue en élévation agrandie du moyen de guidage et de blocage monté sur la paroi arrière du dossier du siège;;
la figure 3 est une coupe selon III-III de la figure 2;
la figure 4 est une une vue de côté du moyen de guidage et de blocage dans la position de guidage de la portion pectorale de la ceinture;
la figure 5 est une vue analogue à la figure 4 montrant la position de blocage; et
la figure 6 est une vue analogue à la figure 1 montrant le montage du siège pour un enfant de taille plus importante;
la figure 7 est une vue analogue à la figure 1 avec une conformation différente de la partie d'assise et un guidage différent de la portion ventrale de la ceinture de sécurité.

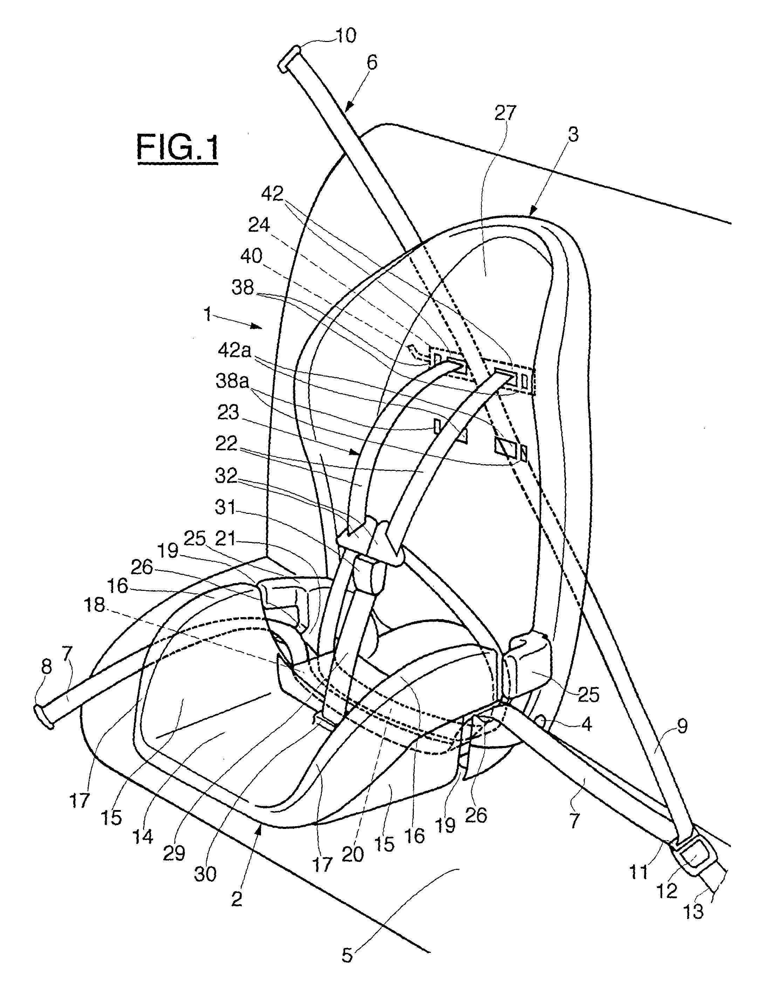

Tel qu'il est illustré sur la figure 1, le siège pour enfant selon l'invention, référencé 1 dans son ensemble, comprend une partie d'assise 2 et une partie de dossier 3 articulée par rapport à la partie d'assise au moyen d'un axe horizontal 4. Le siège 1 est placé sur un siège 5 de véhicule automobile qui est équipé d'une ceinture de sécurité à trois points référencée 6 dans son ensemble qui comporte une portion ventrale 7 fixée à un point d'ancrage 8 du véhicule, en partie basse de la carrosserie et une portion pectorale 9 fixée à un point d'ancrage 10 solidaire de la carrosserie du véhicule, en partie haute de celle-ci.

Comme cela est habituel, les portions ventrale 7 et pectorale 9 sont constituées par une seule et même sangle qui passe librement dans une boucle 11 qui peut être introduite dans un dispositif de verrouillage 12 solidaire de la carrosserie du véhicule, généralement au moyen d'une sangle 13 qui fait saillie entre l'assise et le dossier du siège 5 du véhicule.

La partie d'assise 2 du siège 1 est adaptée pour être posée directement sur le siège 5 du véhicule comme on peut le voir sur la figure 1 sans qu'il y ait lieu de prévoir un support quelconque entre le siège 1 pour enfant et le siège 5 du véhicule. La partie d'assise 2 comporte également des surfaces latérales 15 symétriques identiques qui définissent des rebords 16 pour la partie d'assise. Ces rebords sont de préférence arrondis et inclinés dans leur partie avant 17 éloignée de la partie de dossier.

La surface inférieure de la partie d'assise 2 présente un passage 18 analogue à une sorte de goulotte communiquant avec deux fentes ouvertes 19 pratiquées dans les surfaces latérales 15 depuis les bords 16 jusqu'audit passage 18. La largeur du passage 18 est adaptée à celle de la ceinture de sécurité 6 et peut donc recevoir la portion ventrale 7.

La surface inférieure de la partie d'assise 2 comporte en outre un deuxième passage 20 communiquant avec des ouvertures 21. Le passage 20 est également en forme de goulotte et est adapté pour recevoir une sangle de bretelles 22 d'un harnais de sécurité référencé 23 dans son ensemble. Les extrémité libres de la sangle de bretelles 22 traversent la paroi 27 de la partie de dossier 3 du siège 1 en vue de leur fixation sur une plaque de montage 24 comme on le verra plus loin.

Les surfaces latérales 15 comportent en outre des parties 25 réalisées dans cet exemple, en forme de crochet, qui délimitent en partie un bord des fentes ouvertes 19. Chaque crochet 25 comporte dans sa partie basse un rebord d'appui 26 sur lequel peut venir passer et s'appuyer la portion ventrale 7 de la ceinture de sécurité 6.

Une sangle d'entre-jambes 29 est fixée de manière amovible sur la partie d'assise 2 par un moyen d'ancrage 30. La sangle d'entre-jambes porte une boucle de verrouillage 31 qui peut également recevoir des boucles 32 passant le long des branches de la sangle de bretelles 22 du harnais. Il est ainsi possible, après que l'enfant ait été installé sur le siège, de refermer le harnais 23 en fixant l'ensemble des boucles 32 sur la boucle de verrouillage 31.

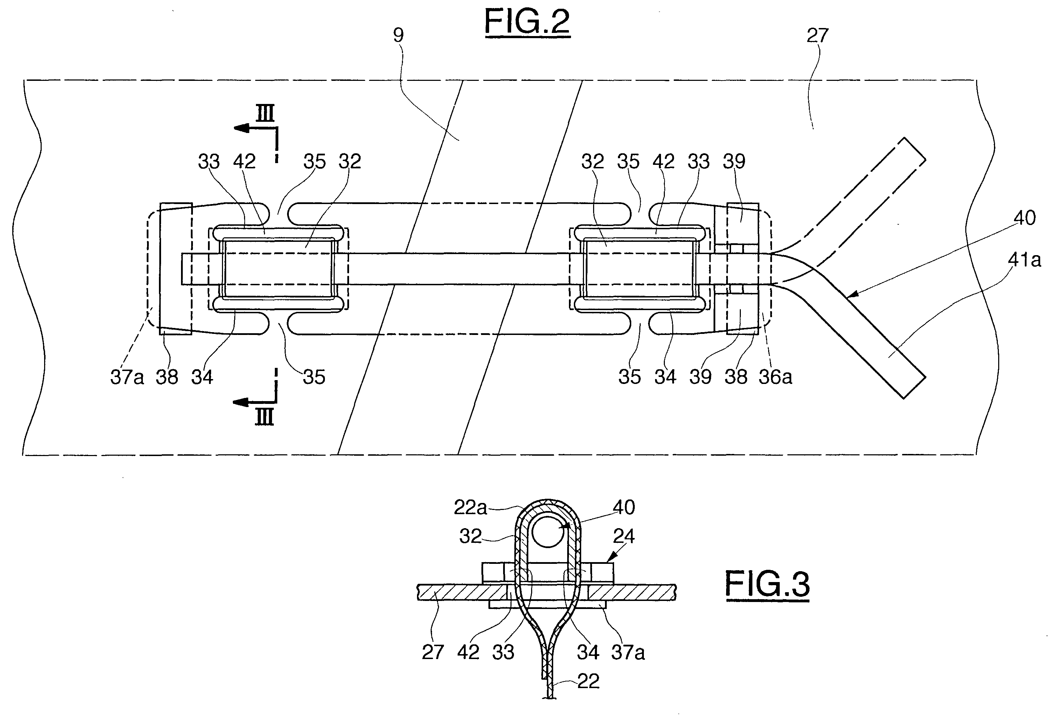

Comme on peut le voir sur les figures 2 à 5, le moyen de guidage et de blocage de la portion pectorale 9 de la ceinture de sécurité 6 est réalisé sous la forme de la plaque de montage 24. Celle-ci est de forme générale oblongue, de préférence réalisée en métal et d'épaisseur suffisante pour présenter la résistance mécanique nécessaire. La plaque de montage 24 présente au voisinage de ses deux extrémités une pièce de retenue constituée sous la forme d'un pontet 32 solidaire de la plaque de montage 24. De part et d'autre des deux pontets 32 sont pratiquées des fentes ouvertes 33, 34 de dimensions adaptées au passage des extrémités de la sangle de bretelles 22 conformées sous la forme de boucles 22a (figure 3). En particulier les ouvertures 35 des fentes ouvertes 33, 34 permettent de faire glisser les boucles 22a en dehors des pontets 32 puis autour des parties d'extrémité de la plaque de montage 24 après que celle-ci ait été désolidarisée comme on le verra plus loin, de la paroi arrière 27 de la partie de dossier 3. De cette manière, il est possible de retirer complètement la sangle de bretelles 22 du harnais de sécurité 23.

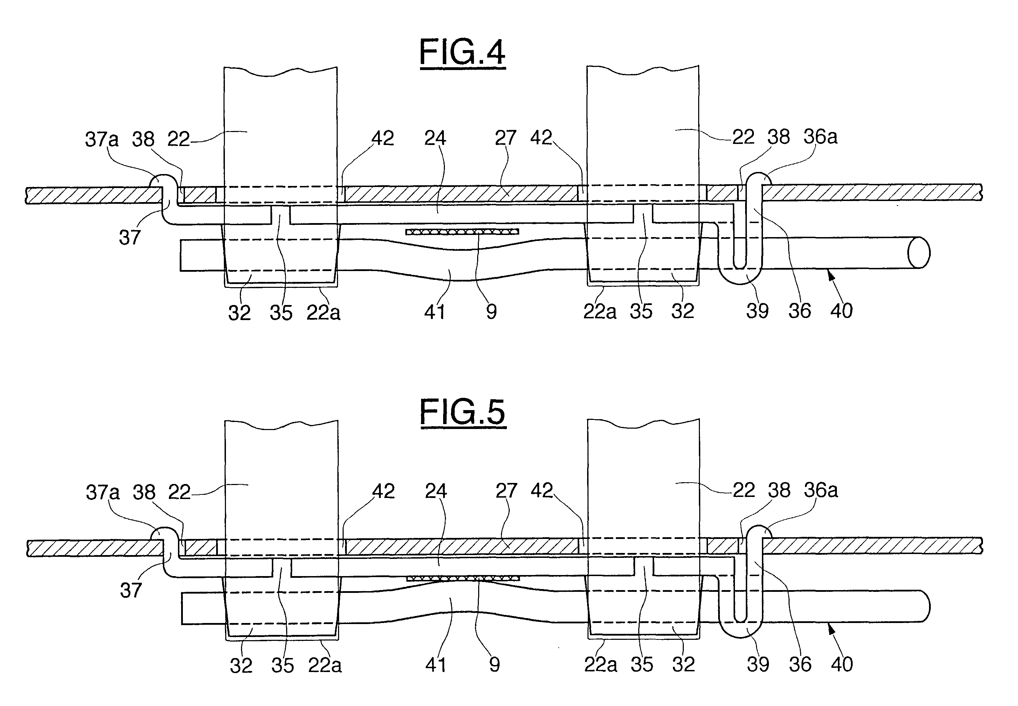

Au voisinage de ses deux extrémités, la plaque de montage 24 comporte des pattes en saillie 36, 37 (figure 4) perpendiculaires au plan de la plaque 24 et adaptées pour pouvoir pénétrer dans des fentes 38 pratiquées dans la paroi 27 du dossier 3. Les extrémités des pattes 36 et 37 comportent des crochets d'encliquetage 36a, 37a. Sur l'un des côtés de la plaque 24, la patte en saillie 36 se poursuit par deux portions en U 39 améliorant l'élasticité de façon à faciliter l'encliquetage de la plaque 24 sur la partie de dossier 3.

L'organe de blocage mobile de la portion pectorale 9 de la ceinture de sécurité 6 est réalisé dans l'exemple illustré sous la forme d'une tige 40, de préférence métallique et d'un diamètre suffisant pour assurer la résistance mécanique nécessaire, qui peut pénétrer dans les orifices des deux pontets 32 et coulisser par rapport à la plaque de montage 24 de façon à pouvoir être retirée complètement ou seulement de l'un des deux pontets 32 pour l'introduction de la sangle pectorale 9. La tige 40 est munie d'une zone courbe 41 (figures 4 et 5) et d'une extrémité coudée 41a. De cette manière, une rotation dans un sens de la tige 40 effectuée manuellement au moyen de son extrémité coudée 41a, peut placer celle-ci dans la position illustrée sur la figure 4 où la zone courbe 41 laisse un passage libre pour la sangle pectorale 9. Dans ce cas, la sangle pectorale 9 est simplement guidée entre la tige 41 et la plaque de montage 24, la sangle pectorale 9 étant cependant librement maintenue entre les deux pontets 32 de la plaque de montage 24. Dans l'autre sens, une rotation de la tige 40 de 180° permet de placer la zone courbe 41 de la tige 10 dans la position illustrée sur la figure 5 où elle vient au contraire bloquer par serrage la sangle pectorale 9 contre la plaque de montage 24 assurant un verrouillage effectif en position de la sangle pectorale 9 par rapport à la partie de dossier 3 du siège 1.

Les extrémités de la sangle de bretelles 22 traversent la paroi 27 de la partie de dossier 3 par deux ouvertures 42. Comme on peut le voir sur la figure 1 la partie de dossier 3 comporte deux groupes de fentes 38 et d'ouvertures 42, le deuxième groupe étant référencé 38a et 42a et se trouvant situé en position plus basse que le premier groupe. Il est ainsi possible de déplacer la plaque de montage 24 depuis les fentes 38 jusqu'aux fentes 38a ce qui entraîne, après remontage des extrémités de la sangle de bretelles 22, un réglage du harnais de sécurité 23 pour recevoir un enfant de plus petite taille.

Le siège pour enfant selon l'invention peut être utilisé de différentes manières selon la taille de l'enfant.

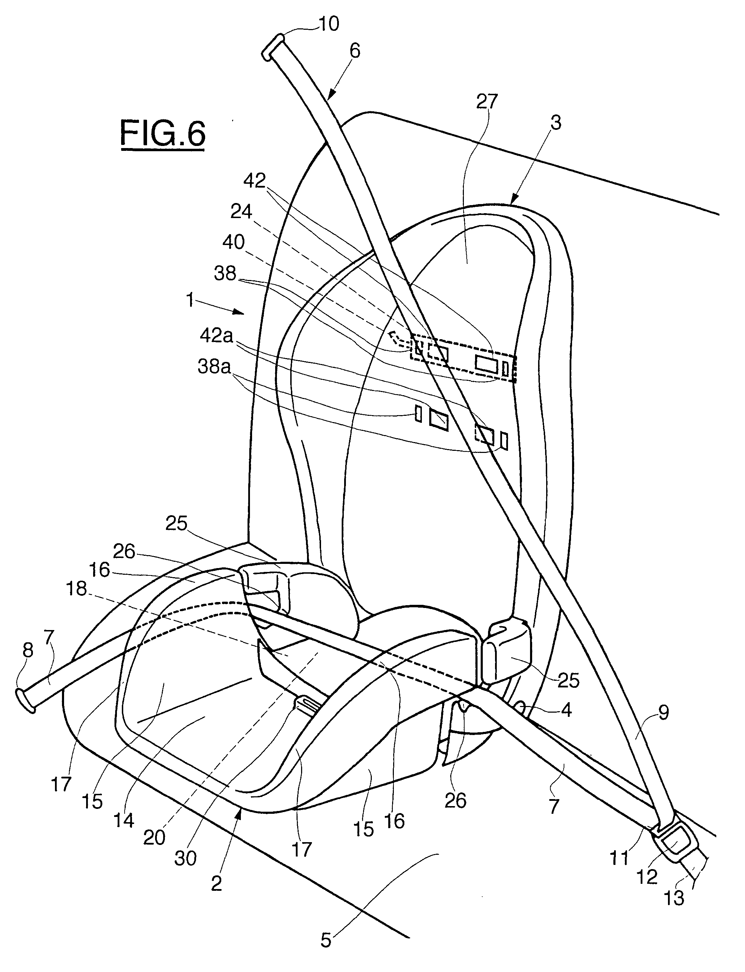

Lorsque l'enfant est de petite taille et d'un poids généralement inférieur à 18 kg, il est nécessaire de le maintenir sur le siège 1 au moyen du harnais de sécurité 23. La position du harnais 23 doit bien entendu être adaptée à l'enfant. Cela est rendu possible par le réglage en hauteur de la plaque de montage 24. Pour la plus petite taille d'enfant, on choisira donc les fentes inférieures, par exemple les fentes 38a illustrées sur les figures 1 et 6.

Pour un enfant de taille plus importante, on modifie la position de la plaque de montage 24. A cet effet, on désolidarise la plaque de montage 24 de la partie de dossier, puis on retire complètement la tige 40, ce qui permet ensuite d'extraire les boucles 22a en les faisant passer à travers les ouvertures 35 et autour des extrémités de la plaque de montage 24. Les boucles 22a, sorties des ouvertures 38a, sont ensuite passées à nouveau à travers la paroi 27 de la partie de dossier 3 en utilisant cette fois les ouvertures 38, à une hauteur différente. Les boucles 22a sont remontées sur la plaque de montage 24 en procédant de manière inverse. Puis la plaque de montage 24 est refixée par encliquetage sur la paroi 27 en utilisant les fentes 38, plus hautes que les fentes 38a.

On place ensuite le siège 1 sur le siège du véhicule 5 comme illustré sur la figure 1. La ceinture de sécurité 6 du véhicule est déployée en faisant passer la portion pectorale 9 derrière la partie de dossier 3. La portion ventrale 7 est placée sur les rebords latéraux 16 de la partie d'assise 2. La ceinture de sécurité 6 est verrouillée au moyen de la boucle de verrouillage 12. Puis la fixation du siège pour enfant 1 sur le siège du véhicule 5 est assurée en faisant simplement glisser la portion ventrale 7 le long des rebords latéraux 16 vers l'avant en suivant leur portion avant inclinée 17 ce qui permet de passer la portion ventrale 7 sous la surface inférieure de la partie d'assise 2 dans le passage 18 puis de la remonter de chaque côté de la partie d'assise 2 par les fentes ouvertes 19 jusqu'à faire passer les deux parties latérales de la portion ventrale 7 sur les deux bords d'appui 26 comme illustré sur la figure 1. En ce qui concerne la portion pectorale 9 de la ceinture de sécurité 6, celle-ci est passée sur la plaque de montage 24 après que la tige coulissante 40 ait été extraite de l'un des pontets 32 plaçant ainsi la tige dans une position qui permet aisément l'introduction de la sangle pectorale 9 dans le moyen de guidage et de blocage constitué par la combinaison de la plaque de montage 24 et de la tige 40. La tige 40 est ensuite poussée de façon à coulisser le long de la plaque de montage et à pénétrer à nouveau dans le pontet d'extrémité 32. La tige peut alors être tournée soit dans la position illustrée sur la figure 4 si l'on souhaite pouvoir ajuster la position du siège 1 par rapport au siège du véhicule 5 soit dans la position de blocage illustrée sur la figure 5 où la sangle pectorale 9 est verrouillée et maintenue en position fixe par rapport au siège 1. On notera que cette position est la position préférée d'utilisation du siège 1. C'est en effet dans cette position que le siège 1 se trouve parfaitement maintenu sur le siège 5 du véhicule.

Le siège 1 étant ainsi maintenu sur le siège 5 du véhicule au moyen de la ceinture de sécurité 6, l'enfant peut être installé dans le siège 1 qui comporte bien entendu un rembourrage qui n'a pas été représenté sur la figure 1. L'enfant est attaché sur le siège 1 au moyen du harnais de sécurité 3.

Bien que dans l'exemple illustré on n'ait prévu que deux positions de réglage possibles en hauteur de la plaque de montage 24, on comprendra qu'un nombre plus important de positions pourrait être envisagé. Il pourrait également être envisagé de prévoir un réglage en hauteur continu.

Dans tous les cas, l'enfant se trouve parfaitement maintenu sur le siège 1 par son harnais de sécurité 23. De plus, les points de fixation de la sangle de bretelles 20 étant constitués par les pontets 32 solidaires de la plaque de montage 24 il apparaît qu'en cas d'accident, c'est-à-dire en cas d'effort brutal tendant au déplacement de l'enfant et du siège 1 vers l'avant, c'est la sangle pectorale 9 de la ceinture de sécurité 6 du véhicule qui retient l'enfant en étant maintenue par la tige métallique 40 retenue dans les deux pontets 32 de la plaque de montage 24. Les efforts s'exerçant sur le harnais de sécurité 23 sont donc finalement intégralement repris par la sangle pectorale 9 de la ceinture de sécurité 6 du véhicule lui-même. Grâce à cette particularité, il est possible de concevoir la partie de dossier 3 d'une manière plus légère, celle-ci ne participant en rien à la résistance mécanique en cas d'accident.

Lorsque l'enfant est de taille plus importante et en particulier s'il dépasse un poids d'environ 18 kg, il est préférable de retirer le harnais de sécurité 23, ce qui se fait aisément comme décrit précédemment. Le moyen d'ancrage 30 permet également le démontage de la sangle 29. Le siège 1 est alors installé sur le siège du véhicule 5 comme illustré sur la figure 6. Comme précédemment l'assise 2 est directement posée sur le siège du véhicule 5. L'enfant est installé dans le siège. Puis la ceinture de sécurité 6 est accrochée sur la boucle de verrouillage 12, la portion pectorale 9 étant passée devant l'enfant et donc également devant la partie de dossier 3. La portion ventrale 7 est quant à elle passée au-dessus des cuisses de l'enfant puis déplacée depuis la partie supérieure des rebords 16 jusque sur les rebords d'appui 26 en passant à travers la partie supérieure des fentes ouvertes 19 au droit des crochets 25. L'enfant se trouve ainsi maintenu sur le siège 1 directement par les portions ventrale 7 et pectorale 9 de la ceinture de sécurité 6 du véhicule. Les crochets 25 assurent en cas d'accident un parfait maintien de l'enfant et du siège 1 par rapport au siège 5 du véhicule.

Dans un mode de réalisation préféré tel qu'illustré sur les figures, la partie de dossier 3 peut être inclinée dans différentes positions par rapport à la partie d'assise 2 au moyen de l'axe d'articulation 4, des moyens non illustrés sur les figures permettant de bloquer 1 partie de dossier en position appropriée.

L'invention permet ainsi d'obtenir un siège facile à installer et à utiliser et dont la fixation sur le siège du véhicule est particulièrement efficace quelle que soit la taille de l'enfant.

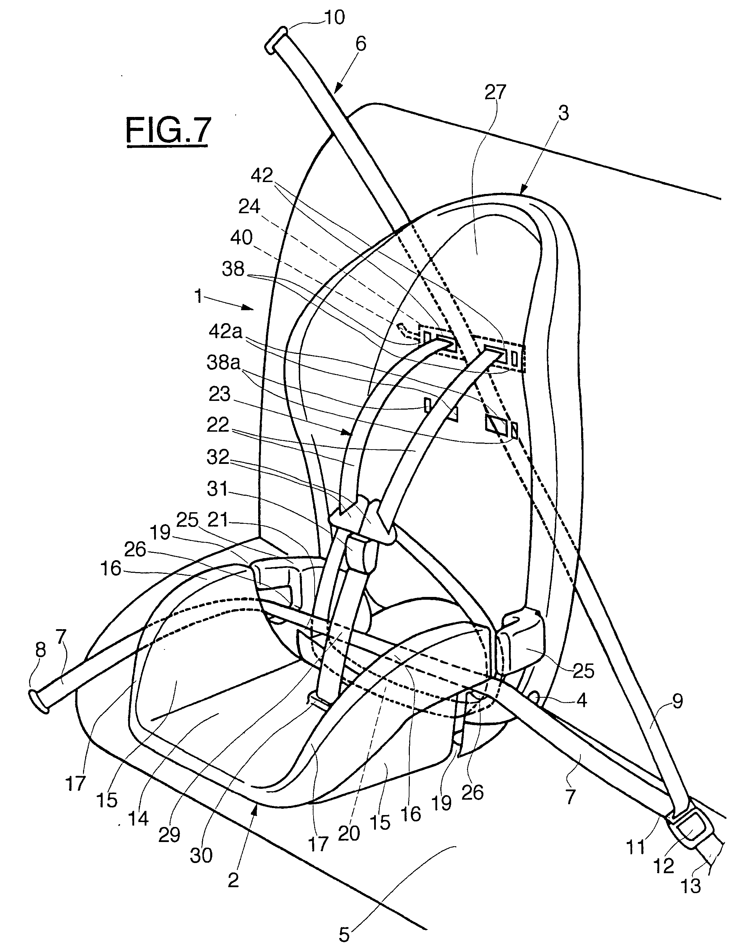

La figure 7 illustre une variante de la partie d'assise, dépourvue du passage inférieur 18 pour la portion ventrale 7 de la ceinture de sécurité. Dans ce cas, lors de l'installation du siège 1 équipé de son harnais de sécurité 23, on pose simplement la portion ventrale 7 de la ceinture de sécurité 6 du véhicule sur les rebords latéraux 16 et on l'engage dans les fentes 19 ouvertes, comme dans le cas illustré par la figure 6, en la faisant passer sur le dessus de la partie d'assise 2, derrière la sangle d'entre-jambes 29, mais devant les branches de la sangle de bretelles 22 du harnais.

Pour installer l'enfant dans le siège ainsi équipé de son harnais, on l'asseoit sur la portion ventrale 7 de la ceinture 6 et on ferme le harnais de la même manière que sur la figure 1.

Les moyens de guidage de la portion ventrale 7 de la ceinture de sécurité, au lieu de comprendre le passage inférieur 18, ne comprennent alors plus que les fentes 19 et les rebords d'appui 26.

## Revendications

1. Siège pour enfant comportant une partie d'assise (2) délimitée par des surfaces latérales (15) définissant des rebords (16) et une partie de dossier (3), destiné à être posé et fixé sur un siège (5) de véhicule automobile équipé d'une ceinture de sécurité (6) à trois points comportant une portion ventrale (7) et une portion pectorale (9), le siège comportant des moyens de guidage de la portion ventrale (7) de la ceinture de sécurité (6) du véhicule, la partie de dossier (3) comportant sur sa face arrière, un moyen (24) de guidage de la portion pectorale (9) de la ceinture de sécurité, ledit moyen de guidage (24) étant réglable en hauteur et comportant en outre des moyens pour fixer les extrémités (22) d'une sangle de bretelles d'un harnais de sécurité (23) traversant la partie de dossier du siège pour enfant, caractérisé par le fait que la partie d'assise (2) est adaptée pour être posée directement sur le siège (5) du véhicule automobile et comporte les moyens de guidage de la portion ventrale (7) de la ceinture de sécurité, lesquels comprennent des fentes ouvertes (19) pratiquées dans les surfaces latérales (15) de la partie d'assise (2) et partiellement délimitées par des portions en forme de crochet (25) avec un rebord d'appui (26) sur lequel peut venir passer et s'appuyer la portion ventrale (7) de la ceinture de sécurité (6) du véhicule.

2. Siège pour enfant selon la revendication 1, caractérisé par le fait que les moyens de guidage de la portion ventrale de la ceinture de sécurité comprennent en outre un passage (18) communiquant avec lesdites fentes ouvertes (19), pratiqué sur la surface inférieure de la partie d'assise (2).

3. Siège pour enfant selon les revendications 1 ou 2, caractérisé par le fait que ledit moyen de guidage de la portion pectorale (9) de la ceinture de sécurité comporte des moyens de blocage en position de ladite portion pectorale, les moyens permettant son réglage en hauteur sur la partie de dossier, comprenant une plaque de montage (24) capable de coopérer avec des moyens de fixation prévus à diverses hauteurs dans la partie de dossier du siège.

4. Siège pour enfant selon la revendication 3, caractérisé par le fait que les moyens de fixation sont des fentes.

5. Siège pour enfant selon les revendications 3 ou 4, caractérisé par le fait que la plaque de montage (24) est munie de pièces de retenue (32) pour un organe de blocage (40) mobile entre une première position permettant l'introduction de la portion pectorale de la ceinture, une deuxième position permettant le guidage de ladite portion pectorale et une troisième position assurant le blocage en position de ladite portion pectorale de la ceinture.

6. Siège pour enfant selon la revendication 5, caractérisé par le fait que les pièces de retenue sont réalisées sous la forme de deux pontets (32) coopérant avec une tige coulissante (40) munie d'une zone courbe (41), jouant le rôle d'organe de blocage.

7. Siège pour enfant selon l'une quelconque des revendications 3 à 6, caractérisé par le fait que la plaque de montage présente, de part et d'autre des pièces de retenue (32), des fentes ouvertes (33, 34) permettant le passage des extrémités de la sangle de bretelles (22) du harnais de sécurité et la fixation de ces extrémités sur les pièces de retenue.

8. Siège pour enfant selon les revendications 6 et 7, caractérisé par le fait que les extrémités de la sangle de bretelles, conformées en boucle (22a), peuvent venir entourer les pontets (32).

9. Siège pour enfant selon l'une quelconque des revendications 3 à 8, caractérisé par le fait que la plaque de montage comprend des moyens d'encliquetage (36a, 37a) capables de coopérer avec les bords de fentes (38, 38a) pratiquées à diverses hauteurs dans la partie de dossier du siège.

10. Siège pour enfant selon l'une quelconque des revendications précédentes, caractérisé par le fait que la partie de dossier (3) est articulée sur la partie d'assise (2) pour permettre de placer la partie de dossier dans différentes inclinaisons.

11. Siège pour enfant selon l'une quelconque des revendications précédentes, caractérisé par le fait que la partie d'assise (2) comprend un moyen d'ancrage (30) pour une sangle d'entre-jambes (29) du harnais de sécurité.

## Claims

1. Child seat comprising a seat part (2) delimited by lateral surfaces (15) defining rims (16) and a backrest part (3), intended to be placed on and attached to a motor vehicle seat (5) equipped with a three-point seatbelt (6) comprising a lap portion (7) and a diagonal portion (9), the seat comprising means for guiding the lap portion (7) of the vehicle seatbelt (6), the backrest part (3) comprising, on its rear side, a means (24) for guiding the diagonal portion (9) of the seatbelt, the said guide means (24) being height adjustable and further comprising means for attaching the ends (22) of shoulder straps of a safety harness (23) passing through the backrest part of the child seat, characterized in that the seat part (2) is designed to be placed directly on the motor vehicle seat (5) and comprises the means of guiding the lap portion (7) of the seatbelt, which means comprise open slots (19) made in the lateral surfaces (15) of the seat part (2) and partially delimited by hook-shaped portions (25) with a bearing rim (26) over which the lap portion (7) of the vehicle seatbelt (6) can pass and on which it can bear.

2. Child seat according to Claim 1, characterized in that the means of guiding the lap portion of the seatbelt further comprise a passage (18) communicating with the said open slots (19), made on the underside of the seat part (2).

3. Child seat according to Claims 1 or 2, characterized in that the said means of guiding the diagonal portion (9) of the seatbelt comprises means for looking the said diagonal portion in position, the means allowing its height adjustment on the backrest part comprising a mounting plate (24) capable of collaborating with securing means provided at various heights in the backrest part of the seat.

4. Child seat according to Claim 3, characterized in that the securing means are slots.

5. Child seat according to Claims 3 or 4, characterized in that the mounting plate (24) is fitted with retaining pieces (32) for a locking member (40) that can move between a first position that allows the diagonal portion of the belt to be introduced, a second position that allows the said diagonal portion to be guided, and a third position which locks the said diagonal portion of the belt in position.

6. Child seat according to Claim 5, characterized in that the retaining pieces are made in the form of two small bridges (32) collaborating with a sliding rod (40) equipped with a curved zone (41) which acts as locking member.

7. Child seat according to any one of Claims 3 to 6, characterized in that the mounting plate has, on each side of the retaining pieces (32), open slots (33, 34) allowing the passage of the ends of the shoulder straps (22) of the safety harness and allowing these ends to be secured to the retaining pieces.

8. Child seat according to Claims 6 and 7, characterized in that the ends of the shoulder straps, shaped into a loop (22a) can pass around the small bridges (32).

9. Child seat according to any one of Claims 3 to 8, characterized in that the mounting plate comprises clip-fastening means (36a, 37a) capable of collaborating with the edges of slots (38, 38a) made at various heights in the backrest part of the seat.

10. Child seat according to any one of the preceding claims, characterized in that the backrest part (3) is articulated to the seat part (2) to allow the backrest part to be given various inclinations.

11. Child seat according to any one of the preceding claims, characterized in that the seat part (2) comprises an anchoring means (30) for a crotch strap (29) of the safety harness.

## Patentansprüche

1. Kindersitz mit einem von Randleisten (16) ausbildenden Seitenwangen (15) begrenzten Sitzteil (2) und einem Rücklehnenteil (3), der zum Aufsetzen und Befestigen auf einem Kraftfahrzeugsitz (5) bestimmt ist, welcher mit einem 3Punkt-Sicherheitsgurt (6) ausgerüstet ist, der ein Beckenteil (7) und ein Schrägschulterteil (9) aufweist, wobei der Sitz Führungsmittel für das Beckenteil (7) des Kraftfahrzeugsicherheitsgurtes (6) aufweist, das Rücklehnenteil (3) auf seiner Rückseite ein Führungsmittel (24) für das Schrägschulterteil (9) des Sicherheitsgurtes aufweist, die des Führungsmittel (24) höhenverstellbar ist und außerdem Mittel aufweist, um die Enden (22) eines Hosenträgergurtes eines Sicherheitsgeschirrs (23) zu fixieren, die durch das Rücklehnenteil des Kindersitzes durchgehen, dadurch gekennzeichnet, dass das Sitzteil (2) zum unmittelbaren Aufsetzen auf den Kraftfahrzeugsitz (5) eingerichtet ist und die Führungsmittel für das Beckenteil (7) des Sicherheitsgurtes aufweist, welche offene Schlitze (19) umfassen, die in den Seitenwangen (15) des Sitzteils (2) ausgebildet und teilweise durch hakenförmige Abschnitte (25) mit jeweils einem Auflagerand (26) begrenzt sind, auf dem das Beckenteil (7) des Kraftfahrzeugsicherheitsgurtes (6) verlaufen und aufliegen kann.

2. Kindersitz nach Anspruch 1, dadurch gekennzeichnet, dass die Führungsmittel des Beckenteils des Sicherheitsgurtes außerdem einen mit den offenen Schlitzen (19) in Verbindung stehenden Durchlass (18) aufweisen, der auf der Unterseite des Sitzteils (2) ausgebildet ist.

3. Kindersitz nach Anspruch 1 oder 2, dadurch gekennzeichnet, dass das Führungsmittel des Schrägschulterteils (9) des Sicherheitsgurtes Mittel zur lagefesten Verriegelung dieses Schrägschulterteils aufweist, wobei diese Mittel dessen Höhenverstellung auf dem Rücklehnenteil erlauben und eine Montageplatte (24) aufweisen, die mit in verschiedenen Höhenlagen an dem Rücklehnenteil des Sitzes angeordneten Befestigungsmitteln zusammenwirken kann.

4. Kindersitz nach Anspruch 3, dadurch gekennzeichnet, dass die Befestigungsmittel Schlitze sind.

5. Kindersitz nach Anspruch 3 oder 4 dadurch gekennzeichnet, dass die Montageplatte (24) mit Haltestücken (32) für ein Verriegelungsorgan (40) versehen ist, das zwischen einer das Einführen des Schrägschulterteils des Sicherheitsgurtes erlaubenden ersten Stellung, einer die Führung dieses Schrägschulterteiles gestattenden zweiten Stellung und einer dritten Stellung verstellbar ist, die die lagefeste Verriegelung des Schrägschulterteils des Sicherheitsgurtes gewährleistet.

6. Kindersitz nach Anspruch 5, dadurch gekennzeichnet, dass die Haltestücke in Gestalt von zwei Bügeln (32) ausgebildet sind, die mit einer mit einem gekrümmten Abschnitt (41) ausgebildeten verschieblichen Stange (40) zusammenwirken, die als Verriegelungsorgan dient.

7. Kindersitz nach einem der Ansprüche 3 bis 6, dadurch gekennzeichnet, dass die Montageplatte auf beiden Seiten der Haltestücke (32) offene Schlitze (33,34) aufweist, die den Durchgang der Enden des Hosenträgergurtes (22) des Sicherheitsgeschirres und die Befestigung dieser Enden an den Haltestücken erlauben.

8. Kindersitz nach den Ansprüchen 6 und 7, dadurch gekennzeichnet, dass die zu Schlaufen (22a) geformten Enden des Hosenträgergurtes um die Bügel (32) geschlungen werden können.

9. Kindersitz nach einem der Ansprüche 3 bis 8, dadurch gekennzeichnet, dass die Montageplatte Einrastmittel (36a, 37a) aufweist, die mit den Rändern von in verschiedenen Höhenlagen in dem Rücklehnenteil des Sitzes ausgebildeten Schlitzen (38,38a) zusammenwirken können.

10. Kindersitz nach einem der vorhergehenden Ansprüche, dadurch gekennzeichnet, dass das Rücklehnenteil (3) an dem Sitzteil (2) derart angelenkt ist, dass das Rücklehnenteil in verschiedene Neigungslagen gebracht werden kann.

11. Kindersitz nach einem der vorhergehenden Ansprüche, dadurch gekennzeichnet, dass das Sitzteil (2) ein Verankerungsmittel (30) für einen zwischen den Beinen durchgehenden Gurt (29) des Sicherheitsgeschirrs aufweist.
